# FASCICULE DE BREVET EUROPEEN

(11) **EP 0 743 205 B1**
(45) Date de publication et mention de la délivrance du brevet: **22.04.1998**
(21) Numéro de dépôt: 96420172.7
(22) Date de dépôt: 14.05.1996
(51) Int. Cl.: B60G 21/05, B60G 7/00, B60B 35/08

(54) **Essieu semi-rigide pour véhicule**
Halbsteife Achse für ein Fahrzeug
Semi-rigid axle for a vehicle

(30) Priorité: 19.05.1995 FR 9506272
(43) Date de publication de la demande: 20.11.1996
(73) Titulaire: VALLOUREC COMPOSANTS AUTOMOBILES VITRY, 51300 Vitry le Francois (FR)
(72) Inventeur: Deletombe, Philippe, 51000 Chalon-sur-Marne (FR); Valin, Daniel, 51300 Saint-Amand-sur-Fion (FR)
(74) Mandataire: Desolneux, Jean-Paul Charles

(56) Documents cités:
- EP-A- 0 650 860
- DE-A- 2 103 399
- DE-C- 262 212
- FR-A- 2 392 838
- FR-A- 2 590 847

## Description

L'invention concerne un essieu tubulaire semi-rigide, utilisé en particulier pour réaliser le train arrière d'un véhicule automobile, et un procédé de réalisation d'un tel essieu. Il s'agit d'un essieu comportant une traverse centrale aux extrémités de laquelle on trouve de chaque côté deux tronçons d'un tube ouvert lesquels permettent d'assurer directement ou indirectement la liaison à la caisse dudit véhicule et le montage des roues.

Cet essieu permet ainsi d'assurer la liaison avec la caisse du véhicule, le guidage des roues, et a une fonction anti-dévers (appelée aussi anti-roulis).

Suivant l'invention, cet essieu a une structure tubulaire.

Des essieux arrière semi-rigides pour véhicules qui assurent les mêmes fonctions sont connus, ces essieux étant généralement réalisés en cinq parties au moins : une traverse, deux bras assemblés chacun à une extrémité de cette traverse, par exemple par soudage, l'ensemble ayant une forme générale en U, et des pièces de liaison assemblées par exemple par soudage sur la traverse ou sur les bras pour assurer la liaison à la caisse. Il est en effet nécessaire, pour qu'un essieu semi-rigide puisse remplir les fonctions qu'on en attend, de réaliser une traverse, présentant une rigidité suffisante en flexion, alliée à une aptitude suffisante à la déformation élastique en torsion.

En effet, les bras montés aux deux extrémités de la traverse doivent pouvoir tourner l'un par rapport à l'autre, autour de l'axe de cette traverse, par torsion élastique de celle-ci, les axes des roues restant pratiquement parallèles entre eux pendant cette rotation. Pour que ce résultat soit atteint, il est nécessaire que chaque bras ait à la fois une grande résistance à la flexion et la torsion. Ces résistances, combinées avec la résistance en flexion de la traverse, sont en particulier nécessaires pour s'opposer aux couples de torsion et de flexion créés en virage par l'adhérence du pneu au sol.

En réalisant la traverse et les bras de l'essieu en trois pièces séparées, on peut donner à chacune les caractéristiques optimales, leur assemblage étant ensuite effectué par des moyens bien connus, tels que le soudage par exemple. Les essieux ainsi obtenus ont l'inconvénient d'être relativement coûteux car ils font appel à de nombreux composants qu'il faut fabriquer séparément puis solidariser entre eux par une succession d'opérations. De plus, ces essieux sont relativement lourds, car au niveau des zones d'assemblage les sections doivent être renforcées.

On connaît également un essieu semi-rigide, décrit dans le brevet français 2 590 847, allégé par rapport aux essieux précédemment décrits, ayant partiellement, une structure monobloc ne nécessitant pas d'assemblage pour le montage des bras sur la traverse, et présentant par ailleurs les caractéristiques mécaniques lui permettant de remplir la fonction de guidage des roues et la fonction anti-dévers.

Cet essieu en forme de U présente une structure partiellement monobloc tubulaire réalisée à partir d'une seule longueur d'un tube. Il comporte une zone médiane, qui constitue la traverse, qui est profilée de façon à présenter au moins une aile à double paroi. A chaque extrémité de la traverse, au-delà de la zone profilée, il existe une zone cintrée sensiblement à angle droit qui se prolonge par un bras à l'extrémité duquel est prévue la fixation de la tête d'essieu sur laquelle sera montée la roue.

La liaison à la caisse de cet essieu est réalisée par des moyens de liaison articulés, tels que des tourillons fixés à l'essieu suivant un axe parallèle à l'axe longitudinal de la traverse et montés en rotation dans des paliers élastiques solidaires de la structure résistante de cette caisse. Cette fonction de liaison à la caisse nécessite donc encore l'appel à des composants qu'il faut fabriquer séparément puis solidariser à la traverse.

On a recherché la possibilité de réaliser un essieu semi-rigide du type qui vient d'être décrit, ayant une structure intégrale tubulaire nécessitant peu ou pas d'assemblage et présentant par ailleurs les caractéristiques mécaniques lui permettant de remplir simultanément les trois fonctions de guidage des roues, d'anti-dévers et de liaison à la caisse. Un tel essieu présente en outre l'avantage d'une grande simplicité d'exécution.

L'essieu semi-rigide qui fait l'objet de l'invention comporte une zone médiane tubulaire, qui constitue la traverse, qui est profilée. Le profil est tel que cette zone présente une bonne résistance à la flexion et une aptitude suffisante à la déformation élastique en torsion. Chacune des extrémités de la traverse est prolongée par deux tronçons d'un tube ouvert formant entre eux au départ de la traverse un angle dièdre inférieur à 180°. Par deux tronçons d'un tube ouvert, on désigne deux profils partant en V d'un tube, selon l'angle dièdre indiqué précédemment, dont la section transversale est sensiblement celle d'une portion de section transversale de tube ouvert de forme non nécessairement circulaire, et dont la section longitudinale est rectiligne ou curviligne, non nécessairement plane, les deux branches du V n'étant pas nécessairement dans un même plan, les deux profils étant issus dudit tube. L'un des deux tronçons de chaque extrémité, le tronçon de liaison, assure la fixation des moyens de liaison avec la caisse ou le chassis du véhicule, et l'autre des deux tronçons de chaque extrémité, le tronçon de bras, assure la fixation de la tête d'essieu qui désigne le composant portant les roues. L'épaisseur de l'essieu tubulaire ainsi défini peut être sensiblement constante sur toute la longueur de la pièce ou présenter des variations pour mieux s'adapter aux contraintes auxquelles il doit résister dans ses différentes zones tout en présentant le poids minimum. Cet essieu présente avantageusement une symétrie par rapport au plan de coupe transversal passant par le milieu de la traverse.

Cet essieu semi-rigide est avantageusement réalisé en acier. Il peut être réalisé à partir de trois longueurs de tube, l'une servant à constituer la traverse profilée, les deux autres servant à constituer les prolongements comportant chacun deux tronçons d'un tube ouvert, tels que décrits ci-dessus, chaque extrémité de la traverse étant assemblée par exemple par soudage bout à bout avec un des prolongements. Préférentiellement et très avantageusement l'essieu sera monobloc, c'est-à-dire constitué d'une seule longueur de tube, ce qui est très favorable pour la résistance mécanique et la simplicité d'exécution de l'essieu suivant l'invention.

Dans le cas où les tronçons nécessiteraient pour assurer une rigidité suffisante des épaisseurs différentes de celle de la traverse et/ou pour renforcer l'essieu sans l'alourdir inutilement, il est possible de choisir un tube ou des tubes ayant des diamètres et des épaisseurs optimisées. On peut aussi ou en variante de chaque côté de la traverse pour renforcer l'essieu relier les deux tronçons d'un tube ouvert par un moyen de renfort pour maintenir leur écartement sous l'effet des sollicitations imposées à l'essieu. Ce moyen de renfort est par exemple constitué d'une pièce dont le profil épouse en totalité ou en partie le profil des deux tronçons. Il peut être emboîté en totalité ou en partie sur ou dans le profil des deux tronçons. Avantageusement il présente une forme générale triangulaire non nécessairement plane qui occupe en totalité ou en partie la zone entre les deux tronçons. D'autre types de moyen de renfort peuvent être prévus, par exemple un tirant reliant les deux tronçons, ou encore une bande métallique soudée le long des deux tronçons pour les fermer et leur conférer ainsi une structure de caisson.

Le profil de la traverse, vue en coupe perpendiculairement à son axe, comporte avantageusement au moins une aile à double paroi les deux parois étant parallèles ou non parallèles. Par parallèle on entend que les deux parois peuvent quelle que soit leur forme être sensiblement à même distance l'une de l'autre, la forme n'étant bien entendu pas nécessairement plane. Le profil est par exemple en forme de U, de L, de T, de V, de X, de Y, de Z ou de H, cette énumération n'étant nullement limitative. Dans la zone médiane profilée, les deux parois d'au moins une aile sont avantageusement au contact l'une de l'autre, ou tout au moins très proches l'une de l'autre, par exemple distantes d'une distance de l'ordre de 0,1 à 1,5 mm.

Les profils longitudinal et transversal et la longueur de chacun des tronçons de tube ouvert sont réalisés de façon à résister aux contraintes en service et à permettre l'intégration sur les tronçons respectifs des moyens de liaison avec la caisse et des têtes d'essieu pour les roues. De préférence, le profil transversal a une forme de U. Il peut être aussi semi-circulaire, ou ovale, ou semi-rectangulaire, ou avoir une forme plus sophistiquée selon les nécessités de réalisation. Le profil longitudinal de chaque tronçon n'est pas nécessairement plan, et pour chaque groupe de deux tronçons la position et l'orientation d'un tronçon par rapport à l'autre peuvent être très variables, les deux profils n'étant pas nécessairement dans un même plan.

Avantageusement le moyen de liaison avec la caisse est articulé ; c'est par exemple un palier que l'on soude à l'extrémité du tronçon de liaison et qui est apte à recevoir une liaison élastique.

Avantageusement aussi la tête d'essieu fixée sur le tronçon de bras, et avantageusement à son extrémité, comporte un composant destiné à recevoir l'extrémité d'un ressort dont l'autre extrémité est reliée à la caisse pour transmettre aux roues la charge du véhicule. Ces ressorts sont, de façon connue, des ressorts hélicoïdaux. Ceci augmente encore la compacité, l'intégration et la simplicité de l'essieu suivant l'invention. Ce composant peut aussi être réalisé comme une pièce indépendante fixée sur le tronçon de bras.

D'autre éléments connus peuvent compléter l'équipement de l'essieu de façon connue, par exemple des amortisseurs ou des barres de torsion.

L'invention concerne également un procédé de réalisation d'un essieu semi-rigide tubulaire dans sa version monobloc suivant l'invention, dans lequel on met en oeuvre une seule longueur d'un tube métallique, de section circulaire ou non circulaire, d'épaisseur constante ou non et qui comporte les étapes essentielles ci-après :
a) réalisation d'une saignée à chaque extrémité du tube, la longueur des saignées étant calculée en fonction du plus long des deux tronçons.
b) écartement et mise en forme en une ou plusieurs passes sur outillages de forme des deux tronçons d'au moins une extrémité pour obtenir au départ de la traverse un angle dièdre inférieur à 180°.
c) si cela n'a pas été effectué en b) écartement et mise en forme des deux tronçons de l'autre extrémité de la même façon qu'en b)
d) mise à longueur des tronçons si nécessaire en fonction des caractéristiques géométriques de l'essieu, cette étape pouvant être en variante réalisée après l'étape e)
e) déformation de la zone médiane du tube de façon à lui donner la forme d'un profilé lui conférant une bonne résistance à la flexion et une aptitude suffisante à la déformation élastique en torsion, cette étape pouvant être réalisée en e) comme indiqué ici, soit en variante avant l'étape a), ou entre les étapes a) et b), ou entre les étapes b) et c), ou entre les étapes c) et d).

Avantageusement les étapes b) et c) peuvent être faites simultanément.

Avantageusement on met en oeuvre un tube de révolution.

Avantageusement également on met en oeuvre un tube en acier.

La zone médiane du tube peut être déformée pour réaliser le profilé constituant la traverse avec ou sans variation d'épaisseur. Avantageusement le profilé ainsi constitué comporte au moins une aile à double paroi les deux parois étant parallèles ou non parallèles. Cette déformation de la zone médiane est réalisée avantageusement de façon que les deux parois d'au moins une aile viennent en contact ou très proches l'une de l'autre comme déjà décrit ci-dessus. La zone médiane peut en particulier être déformée de façon à obtenir un profilé dont la section est en U, en L, en V, en T, en X, en Y, en Z ou en H.

Dans le cas ou des moyens de renfort sont nécessaires entre les tronçons de tube ouvert, le procédé comporte les étapes nécessaires pour la mise en place de ces renforts par des moyens connus tels que le soudage.

De préférence les extrémités du tube dans la zone de découpe des saignées sont, préalablement à la réalisation de la saignée selon l'étape a), mises en forme pour leur donner un profil ovale ou rectangulaire, ou toute forme plus sophistiquée correspondant au profil des tronçons ou nécessaire pour la fixation sur les tronçons d'un tube ouvert des moyens de liaison avec la caisse, des têtes d'essieu pour les roues et des moyens de renfort éventuels.

Avantageusement, des encoches régulièrement espacées sont taillées sur les bords de la saignée pour éviter des déchirures de métal lors de la mise en forme des tronçons selon l'étape b) ou c), dans les cas où l'angle de déformation est important.

Des traitements thermiques relatifs à la totalité ou à certaines zones de l'essieu comme par exemple la traverse peuvent si nécessaire être effectués lors des opérations de formage ou sur l'essieu fini.

Le texte et les figures ci-après décrivent, de façon non limitative, un mode particulier de réalisation de l'invention.

La figure 1 est une vue en plan d'un essieu suivant l'invention.

La figure 2 est une vue en coupe d'un tube pour la réalisation de l'essieu de la figure 1 selon le procédé de l'invention.

La figure 3 est la coupe suivant A de la figure 1.

La figure 4 est la coupe suivant B de la figure 1.

La figure 5 est une vue schématique du procédé suivant l'invention.

La figure 6 est une vue en coupe de l'extrémité évasée du tube avant réalisation de la saignée.

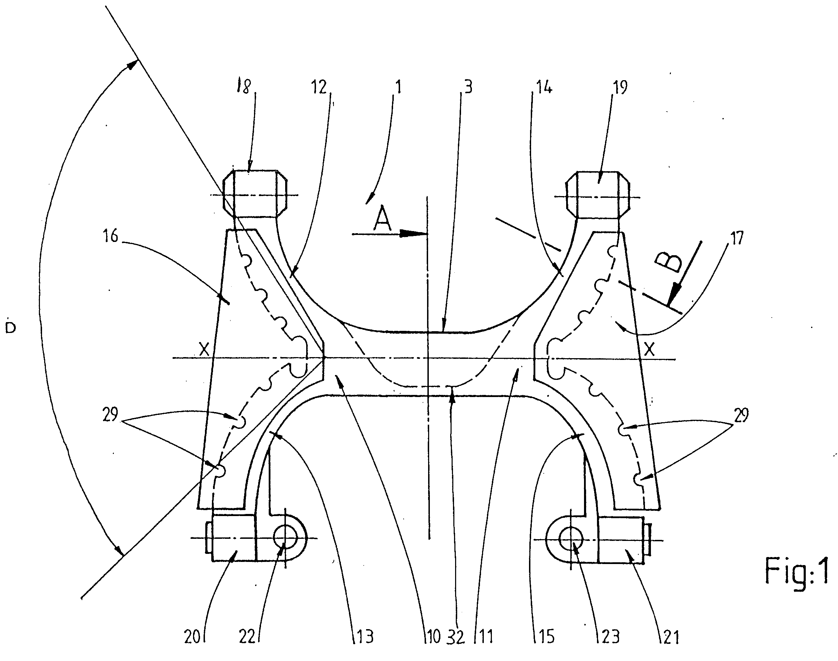

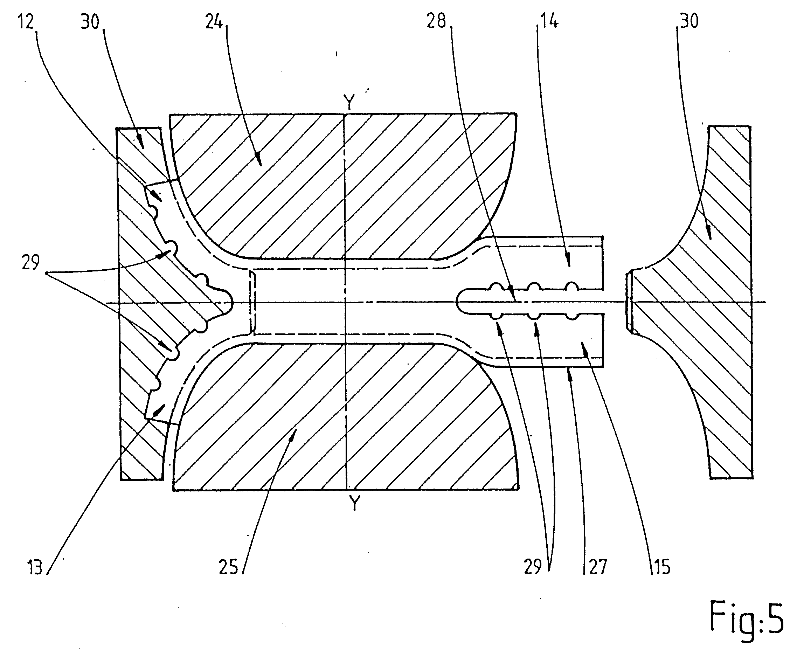

La figure 1 représente, de façon schématique, un essieu semi-rigide monobloc tubulaire 1 suivant l'invention.

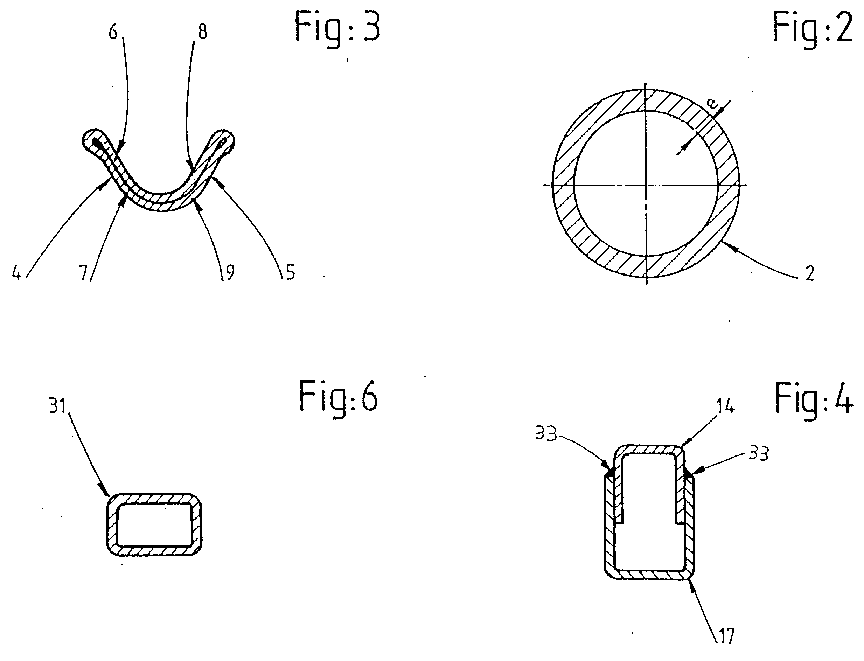

Cet essieu est réalisé à partir d'une seule longueur de tube en acier, de révolution, dont une section 2, agrandie par rapport à l'échelle de la figure 1, est montrée figure 2. Ce tube a une épaisseur e constante d'une extrémité à l'autre.

Cet essieu comporte dans sa zone médiane une traverse 3 réalisée par déformation de la zone médiane de ce tube. On lui confère la forme d'un profilé rectiligne 32 dont la coupe A est représentée figure 3. On voit que ce profilé comporte deux ailes 4, 5 réparties en U autour de l'axe X-X. Chaque aile comporte une double paroi 6, 7 ou 8, 9 résultant de la mise en forme du tube de départ ; ces doubles-parois 6, 7 ou 8, 9 sont plaquées l'une contre l'autre ce qui accroît l'aptitude à la torsion. Un tel profilé présente une grande résistance à la flexion, peu inférieure à celle du tube de révolution initial et une résistance à la torsion élastique beaucoup plus faible que celle du tube initial ; de plus il permet d'importantes déformations en torsion d'une extrémité de la traverse par rapport à l'autre sans sortir du domaine élastique.

On voit qu'à chacune des extrémités 10, 11, de sa partie profilée 32, la traverse 3 est prolongée par deux tronçons d'un tube ouvert 12, 13 pour l'extrémité 10 et 14, 15 pour l'extrémité 11 formant entre eux un angle D d'environ 120° au départ de la traverse 3. Ces tronçons 12, 13, 14, 15 ont un profil transversal en U comme on le voit d'après le repère 14 sur la coupe B représentée figure 4. Les deux tronçons 12, 13 ou 14, 15 de chaque extrémité 10, 11 de la traverse 3 sont reliés deux à deux par un renfort 16, 17. Le renfort 16, soudé sur les tronçons 12, 13, et le renfort 17, soudé sur les tronçons 14, 15, ont un profil en U qui épouse le profil des tronçons 12, 13, 14, 15 comme on le voit repère 17, sur la figure 4, et une forme triangulaire qui occupe et ferme la zone entre les tronçons d'un tube ouvert 12, 13, 14, 15 comme on le voit sur la figure 1. Ces renforts 16, 17 sont emboîtés sur les tronçons 12 et 13, respectivement 14 et 15, puis soudés sur les tronçons comme l'indique la figure 4 pour le renfort 17 et le tronçon 14, assemblés par les soudures 33.

Sur l'extrémité de chacun des tronçons d'un tube ouvert 12 et 14 situés au-dessus de l'axe X-X, tronçons constituant les tronçons de liaison, est soudé un palier 18, 19 destiné à recevoir une liaison élastique non représentée pour réaliser de façon connue l'articulation avec la caisse ou le chassis du véhicule.

Sur l'extrémité de chacun des deux tronçons d'un tube ouvert 13 et 15 situés sous l'axe X-X, tronçons constituant les tronçons de bras, est soudée une tête d'essieu 20, 21 sur laquelle sera montée de façon connue une roue du véhicule. Cette tête d'essieu 20, 21 est munie d'un composant 22, 23 destiné à recevoir de façon connue l'extrémité d'un ressort hélicoïdal non représenté dont l'autre extrémité est reliée à la caisse pour transmettre aux roues la charge du véhicule.

Les encoches 29 ont été réalisées dans les tronçons d'un tube ouvert 12, 13, 14, 15 pour éviter des déchirures de métal lors de la mise en forme des tronçons.

On comprend qu'un tel essieu permet la rotation de chacun des ensembles tronçons/renforts 12, 13, 16 et 14, 15, 17 l'un par rapport à l'autre, grâce à l'aptitude à la torsion élastique de la traverse 3, avec création d'un couple de rappel qui tend à ramener les deux ensembles l'un vers l'autre. L'angle maximal de rotation de l'un des bras par rapport à l'autre, avec retour élastique, dépend des caractéristiques mécaniques de l'acier constituant la traverse 3, de son profil et de ses dimensions.

De façon connue, des amortisseurs non représentés permettent de contrôler les déplacements en rotation autour de l'axe X-X des ensembles tronçons/renforts. Si nécessaire d'autres éléments connus tels qu'une barre de torsion peuvent compléter l'équipement de l'essieu.

Différents profils peuvent être conférés à la traverse 3 pour obtenir une bonne capacité de déformation en torsion élastique associée à une résistance élevée à la flexion, par exemple des profils en L, en T, en V, en X, en H, en Y ou en Z, les parois d'une aile étant ou non plaquées l'une contre l'autre ; le profil en U peut aussi être conçu avec des parois 6, 7 non au contact l'une de l'autre.

De même le profil des tronçons d'un tube ouvert 12, 13, 14, 15 peut avoir différentes formes pour s'adapter aux contraintes techniques de réalisation de l'essieu, par exemple semi-circulaire, ovale, ou plus complexe. La longueur des tronçons de liaison 12, 14 n'est pas nécessairement la même que la longueur des tronçons de bras 13, 15.

Les renforts 16, 17 peuvent être conçus de différentes façons afin d'assurer leur fonction de maintien de l'écartement des tronçons d'un tube ouvert 12, 13 et 14, 15 sous l'effet des sollicitations imposées à l'essieu, par exemple sous forme d'un tirant reliant les deux tronçons ou encore d'une bande métallique soudée le long des deux tronçons pour les fermer et leur conférer ainsi une structure de caisson.

Enfin les moyens de liaison à la caisse 18, 19 et les têtes d'essieu 20, 21 sur lesquelles seront montées les roues peuvent être réalisés de différentes manières connues pour les véhicules, la fixation sur les tronçons de liaison ou de bras étant faite par soudure ou par tout moyen de fixation adapté connu.

La figure 5 décrit de manière schématique le procédé de réalisation suivant l'invention de l'essieu semi-rigide monobloc tubulaire de la figure 1.

On part d'une longueur de tube en acier, de révolution, dont une section 2 est montrée figure 2.

Chaque extrémité 27 du tube de départ est évasée par des moyens classiques connus tel qu'une presse pour obtenir la section 31 de la figure 6 sur la longueur nécessaire pour réaliser les futurs tronçons d'un tube ouvert 12, 13, 14, 15. La section 31 représente le tube avant réalisation de la saignée.

Le tube est ensuite maintenu par les matrices 24, 25 d'une presse non représentée et une saignée 28 est pratiquée sur chaque extrémité 27, sur le grand côté du rectangle 31 de la figure 6, par des moyens classiques connus de découpe, sur la longueur nécessaire pour réaliser les futurs tronçons d'un tube ouvert 12, 13, 14, 15.

Des encoches 29 sont taillées le long des saignées 28 pour éviter les criques ou déchirures de métal lors de la mise en forme ultérieure des tronçons. Les tronçons 12, 13, 14, 15 sont ensuite mis en forme simultanément par évasement en utilisant à chaque extrémité un mandrin 30 qui est avancé en une seule étape vers les matrices de forme 25, 24 par un dispositif non représenté solidaire de la presse également non représenté : la figure 5 présente la situation avant évasement à droite de l'axe Y-Y et la situation après évasement à gauche de l'axe Y-Y.

Ensuite, les tronçons 12, 13, 14, 15 sont mis à la longueur en fonction des caractéristiques de l'essieu, et les renforts 16, 17 de la figure 1, qui ont été fabriqués par ailleurs par tout moyen connu, sont emboîtés sur les tronçons 12, 13, 14, 15 et assemblés par soudage de manière classique, selon le schéma de la figure 4 qui montre en coupe le tronçon 14 et le renfort 17 assemblés par les soudures 33.

L'étape suivante consiste à déformer de façon connue la zone médiane du tube pour lui donner la forme en U et l'orientation voulue de la figure 3 afin de constituer la traverse 3.

Enfin on vient rapporter par soudage de manière classique les paliers 18, 19 et les têtes d'essieu 20, 21 de la figure 1.

Différentes variantes du procédé sont possibles, comme par exemple indiqué ci-après de façon non limitative :
- les extrémités 27 du tube de départ peuvent ne pas être mises en forme et rester circulaires ; au contraire elles peuvent avoir d'autres formes, par exemple ovale, en fonction des contraintes de réalisation de l'essieu.
- les encoches 29 ne sont pratiquées que pour les déformations de grande amplitude où les risques de criques sont réels
- des renforts 16, 17 de conception différente peuvent être prévus, par exemple des tirants reliant les tronçons 12 et 13 ou 14 et 15 ou une bande métallique soudée le long de ces tronçons pour leur conférer une structure de caisson.
- la forme de la traverse 3 peut également être en L, en V, en T, en X, en H, en Y ou en Z, avec parois d'une aile en contact ou pas
- les supports d'articulation 18, 19 et les fusées 20, 21 peuvent être conçus de différentes façons suivant les véhicules et fixés de plusieurs manières sur les tronçons 12, 13, 14, 15.

A titre d'exemple on a réalisé, en partant d'un tube à section circulaire de diamètre extérieur 90 mm et d'épaisseur e 2,15 mm, en acier selon norme DIN St 52 présentant, à l'état de référence, une limite élastique E 0,2 % de 400 MPa, un essieu selon l'invention répondant aux caractéristiques suivantes :
- traverse 3 : longueur profilée 900 mm, section en U selon figure 3
- tronçons 12, 13, 14, 15 : longueur développée 450 mm, section en U selon figure 4 et susceptible de résister en anti-dévers à un couple de 300 Nm avec une déformation angulaire de la traverse de 20°.

L'essieu selon l'invention peut être réalisé dans d'autres matériaux que les aciers, le choix du matériau ressortant des compétences normales du constructeur d'essieux. Afin d'accroître les caractéristiques mécaniques, on peut, le cas échéant, dans le cas d'un essieu en acier, après mise en forme de l'essieu suivant l'invention, effectuer un traitement thermique de la totalité de l'essieu ou localisé.

Les très nombreuses modifications ou adaptations qui peuvent être apportées à l'essieu et au procédé qui font l'objet de l'invention ne sortent pas du domaine couvert par celle-ci.

## Revendications

1. Essieu semi-rigide pour véhicule automobile comportant une zone médiane profilée tubulaire constituant la traverse (3), caractérisé en ce que chacune des extrémités (10, 11) de la traverse (3) est prolongée par deux tronçons d'un tube ouvert (12, 13, 14, 15) formant entre eux au départ de la traverse (3) un angle dièdre (D) inférieur à 180° l'un des deux tronçons (12, 14) de chaque extrémité, le tronçon de liaison, assurant la fixation des moyens de liaison à la caisse, l'autre des deux tronçons (13, 15) de chaque extrémité, le tronçon de bras, assurant la fixation des têtes d'essieu portant les roues, l'ensemble ayant une structure tubulaire

2. Essieu suivant la revendication 1 caractérisé en ce que le profil de la zone médiane est tel qu'il confère à cette zone une résistance à la flexion et une aptitude à la déformation élastique en torsion.

3. Essieu suivant la revendication 1 ou 2 caractérisé en ce qu'il est monobloc, c'est-à-dire constitué d'une seule longueur de tube.

4. Essieu suivant la revendication 1 ou 2 caractérisé en ce qu'il est constitué de trois longueurs de tube, chaque extrémité de la traverse étant assemblée à deux tronçons d'une longueur d'un tube ouvert

5. Essieu suivant une des revendications 1 à 4 caractérisé en ce que la zone médiane tubulaire constituant la traverse présente un profil ayant au moins une aile à double paroi.

6. Essieu suivant l'une des revendications 1 à 5 caractérisé en ce que le profil de la traverse (3), vu en coupe, est de préférence en U ou en L ou en T ou en V ou en X ou en Y ou en Z ou en H.

7. Essieu suivant une des revendications 5 ou 6 caractérisé en ce que dans la zone médiane profilée (3) les deux parois (6, 7) d'au moins une aile sont au contact l'une de l'autre.

8. Essieu suivant l'une des revendications 1 à 7 caractérisé en ce que les tronçons de tube ouvert (12, 13, 14, 15) ont un profil transversal en forme de U ou en forme semi-circulaire ou en forme ovale ou en forme semi-rectangulaire.

9. Essieu suivant l'une des revendications 1 à 8 caractérisé en ce que les deux tronçons d'un tube ouvert (12, 13) et (14, 15) de chaque extrémité sont reliés par un moyen de renfort (16, 17).

10. Essieu suivant la revendication 9 caractérisé en ce que le moyen de renfort (16, 17) est constitué d'une pièce dont le profil épouse en tout ou partie les deux tronçons (12, 13, 14, 15) qu'il relie.

11. Essieu suivant revendication 9 ou 10 caractérisé en ce que chaque moyen de renfort (16, 17) est monté emboîté en totalité ou en partie sur ou dans le profil des deux tronçons (12, 13, 14, 15) qu'il relie.

12. Essieu suivant l'une des revendications 9 à 11 caractérisé en ce que chaque moyen de renfort (16, 17) est de forme générale triangulaire non nécessairement plane et qu'il occupe en totalité ou en partie la zone entre les deux tronçons (12, 13, 14, 15) qu'il relie.

13. Essieu suivant l'une des revendications 1 à 12 caractérisé en ce que la liaison à la caisse (18, 19) est assurée par un moyen de liaison à articulation fixé sur et de préférence à l'extrémité du tronçon de liaison.

14. Essieu suivant l'une des revendications 1 à 13 caractérisé en ce que la tête d'essieu (20, 21) sur laquelle sera montée la roue est fixée sur le tronçon de bras et comporte un composant destiné à recevoir l'extrémité d'un ressort hélicoïdal dont l'autre extrémité est reliée à la caisse du véhicule.

15. Essieu suivant l'une des revendications 1 à 14 caractérisé en ce qu'il est en acier.

16. Procédé de réalisation d'un essieu semi-rigide tubulaire comportant une zone médiane profilée constituant la traverse laquelle est prolongée à chacune de ses extrémités par deux tronçons d'un tube ouvert, le tronçon de liaison et le tronçon de bras, formant entre eux un angle dièdre inférieur à 180° au départ de la traverse caractérisé en ce que l'on met en oeuvre une seule longueur de tube que l'on soumet aux étapes suivantes :
a) réalisation d'une saignée à chaque extrémité du tube, la longueur des saignées étant calculée en fonction du plus long des deux tronçons.
b) écartement et mise en forme en une ou plusieurs passes sur outillages de forme des deux tronçons d'au moins une extrémité pour obtenir au départ de la traverse un angle dièdre inférieur à 180°.
c) écartement et mise en forme de l'autre extrémité de la même façon.
d) mise à longueur des tronçons si nécessaire en fonction des caractéristiques géométriques de l'essieu, cette étape pouvant être en variante réalisée après l'étape e)
e) déformation de la zone médiane du tube de façon à lui donner la forme d'un profilé,
étant précisé que l'étape e) peut être également réalisée en variante avant l'étape a), ou entre les étapes a) et b), ou entre les étapes b) et c), ou entre les étapes c) et d).

17. Procédé suivant la revendication 16 caractérisé en ce que les étapes b) et c) sont effectuées simultanément.

18. Procédé suivant revendication 16 ou 17 caractérisé en ce que l'on déforme la zone médiane du tube dans l'étape e) en lui donnant un profil ayant au moins une aile à double paroi.

19. Procédé suivant l'une des revendications 16 à 18 caractérisé en ce qu'on déforme la zone médiane du tube selon l'étape e) de façon à obtenir un profilé dont la section est en U ou en L ou en T ou en V ou en X ou en Y ou en Z ou en H.

20. Procédé suivant l'une des revendications 16 à 19 caractérisé en ce que plusieurs encoches sont taillées sur les bords de la saignée avant l'étape d'écartement b).

21. Procédé suivant l'une des revendications 16 à 20 caractérisé en ce qu'il comporte au moins une étape de mise en place de moyens de renfort entre les tronçons de tube ouvert de chaque extrémité.

22. Utilisation d'un essieu suivant l'une des revendications 1 à 15 à la réalisation du train arrière d'un véhicule automobile.

## Claims

1. A semi-rigid axle for an automotive vehicle, comprising a profiled tubular medial zone constituting the crosspiece (3), characterized in that each of the extremities (10, 11) of the crosspiece (3) is extended by two sections of an open tube (12, 13, 14, 15) forming between them, from the start of the crosspiece (3) a dihedral angle (D) of less than 180°, one of the two sections at each extremity (12, 14), the connection section, ensuring mounting of means for connection to the body, the other two sections at each extremity (13, 15), the arm section, ensuring mounting of axle bearings carrying the wheels, the assembly having a tubular structure.

2. An axle according to claim 1, characterized in that the profile of the medial zone is such that said zone exhibits bending strength and can deform elastically under torsion.

3. An axle according to claim 1 or claim 2, characterized in that it is an integral piece, i.e., constituted by a single length of tube.

4. An axle according to claim 1 or claim 2, characterized in that it is constituted by three lengths of tube, each extremity of the crosspiece being assembled with two sections of a length of open tube.

5. An axle according to any one of claims 1 to 4, characterized in that the profile of the tubular medial zone constituting the crosspiece comprises at least one double-walled wing.

6. An axle according to any one of claims 1 to 5, characterized in that the profile of the crosspiece (3), viewed in cross section, is preferably a U, an L, a T, a V, an X, a Y, a Z or an H shape.

7. An axle according to claim 5 or claim 6, characterized in that in the profiled medial zone (3), the two walls (6, 7) of at least one wing are in mutual contact.

8. An axle according to any one of claims 1 to 7, characterized in that the transverse profile of the open tube sections (12, 13, 14, 15) is a U shape, a semi-circular shape, an oval shape or a semi-rectangular shape.

9. An axle according to any one of claims 1 to 8, characterized in that the two sections of open tube (12, 13) and (14, 15) at each extremity are connected by a reinforcing means (16, 17).

10. An axle according to claim 9, characterized in that the reinforcing means (16, 17) is constituted by one piece, the profile of which completely or partially corresponds to the shape of the two sections (12, 13, 14, 15) which it connects.

11. An axle according to claim 9 or claim 10, characterized in that each reinforcing means (16, 17) is mounted so as to be completely or partially nested on or in the profile of the two sections (12, 13,14, 15) which it connects.

12. An axle according to any one of claims 9 to 11, characterized in that each reinforcing means (16, 17) is generally triangular in shape and not necessarily planar and that it completely or partially occupies the zone between the two sections (12, 13, 14, 15) which it connects.

13. An axle according to any one of claims 1 to 12, characterized in that the connection (18, 19) to the body is ensured by means of an articulated connecting means fixed on and preferably at the extremity of the connection section.

14. An axle according to any one of claims 1 to 13, characterized in that the axle bearing (20, 21) on which the wheel will be mounted is fixed to the arm section and comprises a component intended to receive the extremity of a helical spring, the other extremity of which is connected to the vehicle body.

15. An axle according to any one of claims 1 to 14, characterized in that it is formed from steel.

16. A process for producing a semi-rigid tubular axle comprising a profiled medial zone constituting the crosspiece which is extended at each of its extremities by two sections of open tube, the connection section and the arm section, forming between them a dihedral angle of less than 180° from the start of the crosspiece, characterized in that a single length of tube is used which undergoes the following steps:
a) forming an incision at each extremity of the tube, the length of the incisions being calculated so as to be a function of the longest of the two sections;
b) spreading and forming the two sections, in one or more passes using forming tools, at at least one extremity to obtain a dihedral angle of less than 180° from the start of the crosspiece;
c) spreading and forming the other extremity in the same manner;
d) cutting the sections to length if necessary, depending on the geometric characteristics of the axle, this step possibly being carried out after step e);
e) deforming the medial zone of the tube so as to produce the shape of a profile;
wherein step e) can also be carried out before step a), or between steps a) and b), or between steps b) and c), or between steps c) and d).

17. A process according to claim 16, characterized in that steps b) and c) are carried out simultaneously.

18. A process according to claim 16 or claim 17, characterized in that the medial zone of the tube is deformed in step e) to give it a profile having at least one double-walled wing.

19. A process according to any one of claims 16 to 18, characterized in that the medial zone of the tube is deformed in step e) so as to obtain a profile with a cross section in the shape of a U, an L, a T, a V, an X, a Y, a Z or an H.

20. A process according to any one of claims 16 to 19, characterized in that a plurality of notches are cut in the edges of the incision before spreading step b).

21. A process according to any one of claims 16 to 20, characterized in that it comprises at least one step for positioning reinforcing means between the open tube sections at each extremity.

22. Use of an axle according to any one of claims 1 to 15 for the production of the rear axle assembly of an automotive vehicle.

## Patentansprüche

1. Halbsteife Achse für ein Kraftfahrzeug, die eine profilierte, rohrförmige, mittlere Zone aufweist, die den Querträger (3) bildet, dadurch gekennzeichnet, daß jedes der Enden (10, 11) des Querträgers (3) durch zwei Abschnitte (12, 13, 14, 15) eines offenen Rohrs verlängert wird, die zwischen sich am Anfang des Querträgers (3) einen Flächenwinkel (D) von weniger als 180° bilden, wobei einer der beiden Abschnitte (12, 14) jedes Endes, der Verbindungsabschnitt, die Befestigung der Verbindungsmittel an der Karosserie gewährleistet, während der andere der beiden Abschnitte (13, 15) jedes Endes, der Armabschnitt, die Befestigung der die Räder tragenden Achsköpfe gewährleistet, wobei die Einheit eine rohrförmige Struktur aufweist.

2. Achse nach Anspruch 1, dadurch gekennzeichnet, daß das Profil der mittleren Zone so ist, daß es dieser Zone eine Biegefestigkeit und eine Eignung zur elastischen Verdrehverformung verleiht.

3. Achse nach Anspruch 1 oder 2, dadurch gekennzeichnet, daß sie aus einem Stück ist, d.h. aus einer einzigen Rohrlänge besteht.

4. Achse nach Anspruch 1 oder 2, dadurch gekennzeichnet, daß sie aus drei Rohrlängen besteht, wobei jedes Ende des Querträgers an zwei Abschnitte einer Länge eines offenen Rohrs montiert ist.

5. Achse nach einem der Ansprüche 1 bis 4, dadurch gekennzeichnet, daß die den Querträger bildende, mittlere, rohrförmige Zone ein Profil aufweist, das mindestens einen Flügel mit doppelter Wand besitzt.

6. Achse nach einem der Ansprüche 1 bis 5, dadurch gekennzeichnet, daß das Profil des Querträgers (3) im Schnitt gesehen vorzugsweise U- oder L- oder T- oder V- oder X- oder Y- oder Z- oder H-förmig ist.

7. Achse nach einem der Ansprüche 5 oder 6, dadurch gekennzeichnet, daß in der profilierten mittleren Zone (3) die beiden Wände (6, 7) mindestens eines Flügels miteinander in Kontakt stehen.

8. Achse nach einem der Ansprüche 1 bis 7, dadurch gekennzeichnet, daß die Abschnitte (12, 13, 14, 15) eines offenen Rohrs ein U-förmiges oder ein halbkreisförmiges oder ein ovales oder ein halb-rechteckiges Querprofil aufweisen.

9. Achse nach einem der Ansprüche 1 bis 8, dadurch gekennzeichnet, daß die beiden Abschnitte (12, 13) und (14, 15) eines offenen Rohrs jedes Endes durch ein Verstärkungsmittel (16, 17) miteinander verbunden werden.

10. Achse nach Anspruch 9, dadurch gekennzeichnet, daß das Verstärkungsmittel (16, 17) aus einem Teil besteht, dessen Profil sich ganz oder teilweise an die beiden Abschnitte (12, 13, 14, 15) anpaßt, die es verbindet.

11. Achse nach Anspruch 9 oder 10, dadurch gekennzeichnet, daß jedes Verstärkungsmittel (16, 17) vollständig oder teilweise auf oder in das Profil der beiden von ihm verbundenen Abschnitte (12, 13, 14 15) eingesetzt montiert wird.

12. Achse nach einem der Ansprüche 9 bis 11, dadurch gekennzeichnet, daß jedes Verstärkungsmittel (16, 17) die allgemeine Form eines nicht unbedingt ebenen Dreiecks aufweist und daß es vollständig oder teilweise die Zone zwischen den beiden Abschnitten (12, 13, 14, 15) bedeckt, die es verbindet.

13. Achse nach einem der Ansprüche 1 bis 12, dadurch gekennzeichnet, daß die Verbindung mit der Karosserie (18, 19) von einem gelenkigen Verbindungsmittel gewährleistet wird, das auf das und vorzugsweise an das Ende des Verbindungsabschnitts montiert ist.

14. Achse nach einem der Ansprüche 1 bis 13, dadurch gekennzeichnet, daß der Achskopf (20, 21), an dem das Rad montiert werden wird, am Armabschnitt befestigt ist und ein Bauteil aufweist, das das Ende einer Schraubenfeder aufnimmt, deren anderes Ende mit dem Karosserie des Fahrzeugs verbunden ist.

15. Achse nach einem der Ansprüche 1 bis 14, dadurch gekennzeichnet, daß sie aus Stahl ist.

16. Verfahren zur Herstellung einer halbsteifen, rohrförmigen Achse, die eine den Querträger bildende, profilierte, mittlere Zone aufweist, die an jedem ihrer Enden von zwei Abschnitten eines offenen Rohrs verlängert wird, dem Verbindungsabschnitt und dem Armabschnitt, die zwischen sich am Anfang des Querträgers einen Flächenwinkel von weniger als 180° bilden, dadurch gekennzeichnet, daß man eine einzige Rohrlänge verwendet, die man den folgenden Verfahrensschritten unterwirft:
a) Herstellung eines Einschnitts an jedem Rohrende, wobei die Länge der Einschnitte in Abhängigkeit vom längeren der beiden Abschnitte berechnet wird,
b) Auseinanderspreizen und Formen in einem oder mehreren Arbeitsgängen auf Form-Werkzeugen der beiden Abschnitte mindestens eines Endes, um am Anfang des Querträgers einen Flächenwinkel von weniger als 180° zu erhalten,
c) Auseinanderspreizen und Formen des anderen Endes in gleicher Weise,
d) Schneiden auf Länge der Abschnitte, wenn nötig, in Abhängigkeit von der geometrischen Merkmalen der Achse, wobei dieser Verfahrensschritt in einer Variante nach dem Schritt e) stattfinden kann,
e) Verformung der mittleren Zone des Rohrs, um ihr die Form eines Profilstücks zu verleihen,
wobei darauf hingewiesen wird, daß der Verfahrensschritt e) in einer Variante auch vor dem Verfahrensschritt a) oder zwischen den Verfahrensschritten a) und b) oder zwischen den Verfahrensschritten b) und c) oder zwischen den Verfahrensschritten c) und d) stattfinden kann.

17. Verfahren nach Anspruch 16, dadurch gekennzeichnet, daß die Verfahrensschritte b) und c) gleichzeitig durchgeführt werden.

18. Verfahren nach Anspruch 16 oder 17, dadurch gekennzeichnet, daß man die mittlere Zone des Rohrs im Verfahrensschritt e) verformt, indem man ihr ein Profil verleiht, das mindestens einen Flügel mit doppelter Wand aufweist.

19. Verfahren nach einem der Ansprüche 16 bis 18, dadurch gekennzeichnet, daß man die mittlere Zone des Rohrs gemäß dem Verfahrensschritt e) derart verformt, daß man ein Profilstück erhält, dessen Querschnitt U- oder L- oder T- oder V- oder X- oder Y- oder Z- oder H-förmig ist.

20. Verfahren nach einem der Ansprüche 16 bis 19, dadurch gekennzeichnet, daß vor dem Verfahrensschritt des Auseinanderspreizens b) mehrere Kerben an den Rändern des Einschnitts ausgeschnitten werden.

21. Verfahren nach einem der Ansprüche 16 bis 20, dadurch gekennzeichnet, daß es mindestens einen Verfahrensschritt des Einsetzens von Verstärkungsmitteln zwischen den Abschnitten des offenen Rohrs jedes Endes aufweist.

22. Verwendung einer Achse nach einem der Ansprüche 1 bis 15 zur Herstellung des hinteren Fahrgestells eines Kraftfahrzeugs.
